# EUROPEAN PATENT APPLICATION

(11) **EP 1 808 539 A2**
(43) Date of publication of application: **18.07.2007**
(21) Application number: 07000014.6
(22) Date of filing: 02.01.2007
(51) Int. Cl.: E04B 2/74, F16B 21/04

(54) **Modular architectural element**

(30) Priority: 16.01.2006 IT MI20060057
(71) Applicant: Art Productions Limited, Pieta MSD 08 (MT)
(72) Inventor: Osterwalder, Valeria, 6900 LUGANO (CH)
(74) Representative: Postiglione, Ferruccio

(57) **Abstract**

A modular architectural element (10) comprises a frame (12) formed by contour walls (14a-14d) defining at least several side walls of the architectural element. The architectural element (10) defines an inner cavity and the frame (12) permits an access to such inner cavity. Two or more architectural elements are adapted to be fit with each other at one contour wall of the frame (12) and to be coupled to each other by means of removable coupling means (16) which cross the respective fit contour walls of the two adjacent architectural elements. The positioning of the removable coupling means is permitted through the inner cavity of the architectural element, through the frame access (12).

## Description

Object of the present invention is an architectural element, in particular of modular type.

The present invention refers to an architectural element particularly intended to be utilised as a furnishing or decorative element, preferably but not exclusively associated with mosaic surfaces.

More in particular, the invention refers to an architectural element in transparent material, for example plastic material, also adapted to make a lighting body.

Even more preferably, the present invention relates to a modular architectural element which may be rapidly and easily associated with similar or analogous architectural elements, so to form versatile, functional structures such as walls, dividers, stands or other items. The present invention may for example be utilised in houses, store, fair or office setups, and satisfies the need of making versatile structures which are easily built and/or modified and have a pleasant aesthetic appeal.

At the moment, the known architectural elements do not permit a wide versatility and ease of use. Furthermore, they are not capable of satisfying the additional need of making a compact, stable and strong structure.

In addition to that stated above, the known architectural elements are realised in a single body, not permitting the modification of their external appearance.

The problem underlying the present invention is that of proposing a modular architectural element which has structural and functional characteristics such to satisfy the aforesaid needs and, at the same time, remedying the drawbacks mentioned with reference to the prior art.

Such problem is resolved by means of a modular architectural element in accordance with claim 1. The dependent claims relate to advantageous embodiments of the architectural element.

Further characteristics and advantages of the modular architectural element shall be evident from the following description of several preferred embodiments, given as indicative and not limiting, with reference to the attached figures, wherein:
Figures 1 and 2 illustrate two perspective views from different angles of a possible embodiment of a coupling element or key making up part of the modular architectural element according to the present invention;
Figures 3 and 4 illustrate two perspective views from different angles of a possible embodiment of a coupling element or key making up part of the modular architectural element according to the present invention;
Figures 5-8 illustrate front, rear, top and side views, respectively, of the coupling element of figure 3;
Figure 9 illustrates a sectional view of the coupling element along the line IX-IX of figure 8;
Figure 10 illustrates a sectional view of the coupling element along the line X-X of figure 8;
Figures 11-15 illustrate perspective, bottom, front, top and side views, respectively, of a possible embodiment of a release accessory for the modular architectural element according to the present invention;
Figure 16 illustrates a sectional view of the release element along the line XVI-XVI of figure 14;
Figure 17 illustrates a sectional view of the release element along the line XVII-XVII of figure 14;

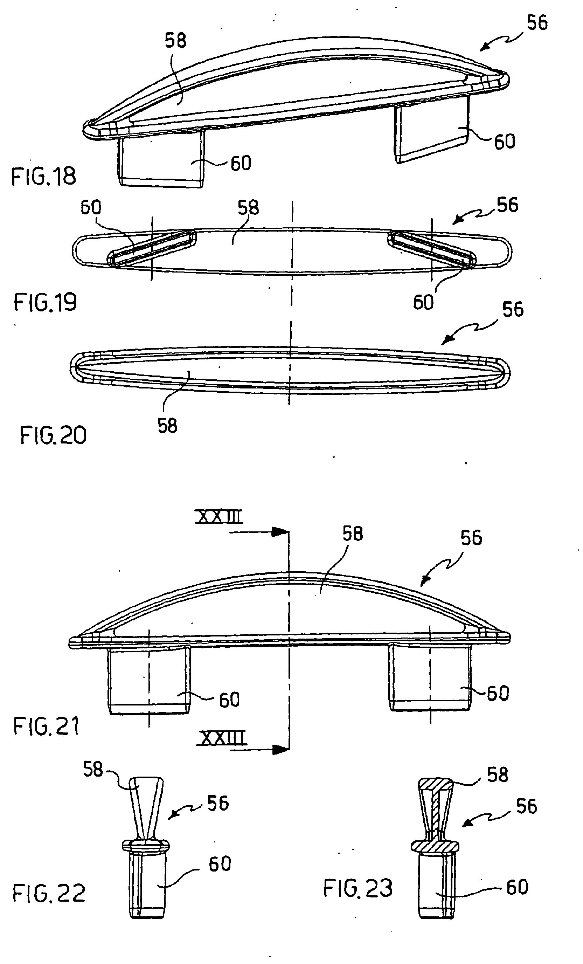

Figures 18-22 illustrate perspective, bottom, top, front and side views, respectively, of a possible embodiment of a release accessory for the modular architectural element according to the present invention;
Figure 23 illustrates a sectional view of the release element along the line XXIII-XXIII of figure 21;

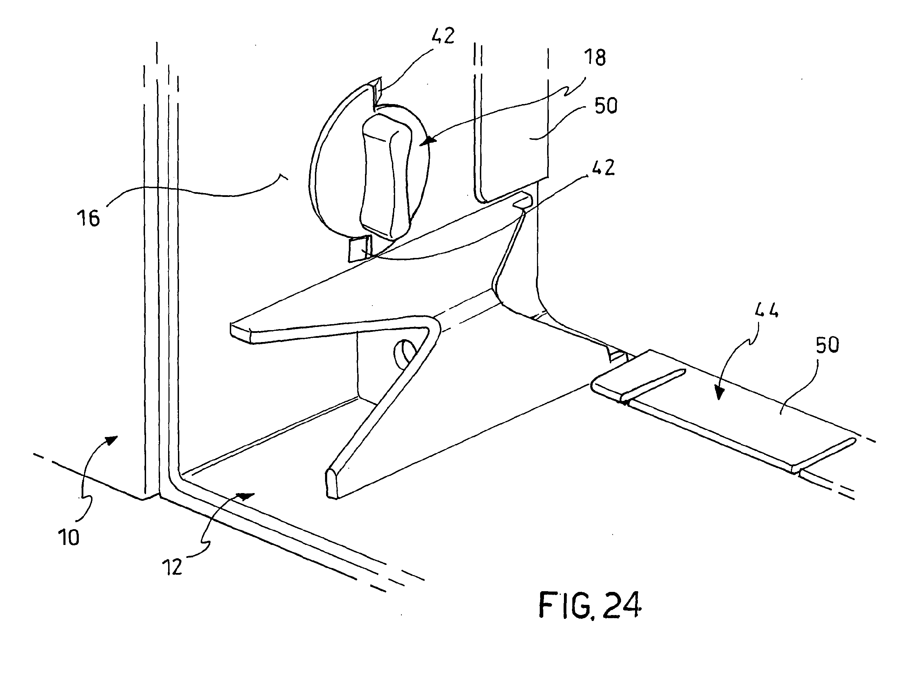

Figure 24 illustrates an enlarged and partial detail of two coupled modular architectural elements;
Figure 25 illustrates a perspective view of a possible embodiment of a frame of a modular architectural element according to the present invention;

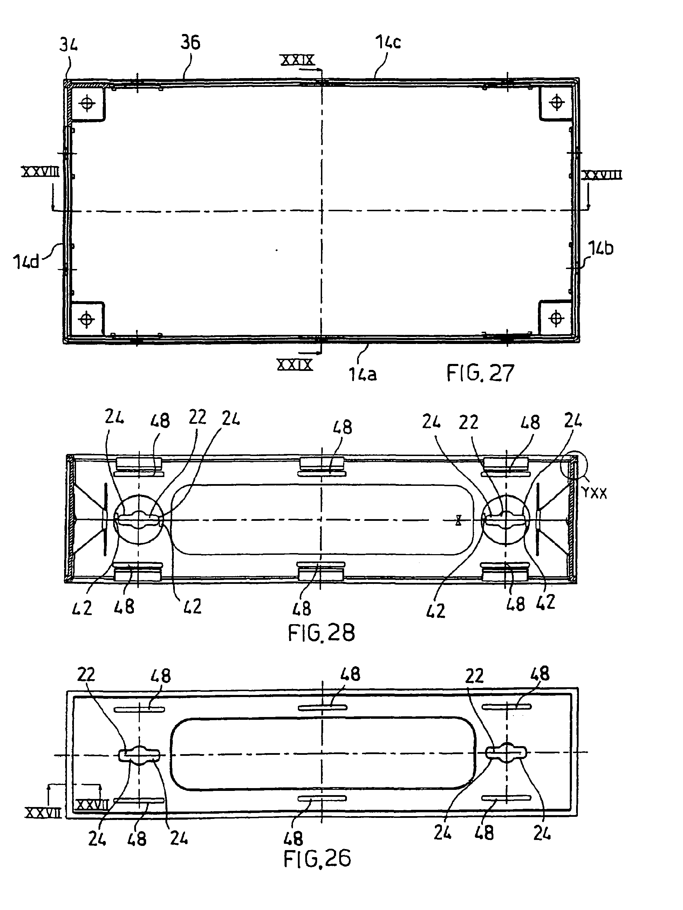

Figure 26 illustrates a side front view of the frame of figure 25;
Figure 27 illustrates a sectional view of the frame along the line XXVII-XXVII of figure 26;
Figure 28 illustrates a sectional view of the frame along the line XXVIII-XXVIII of figure 27;

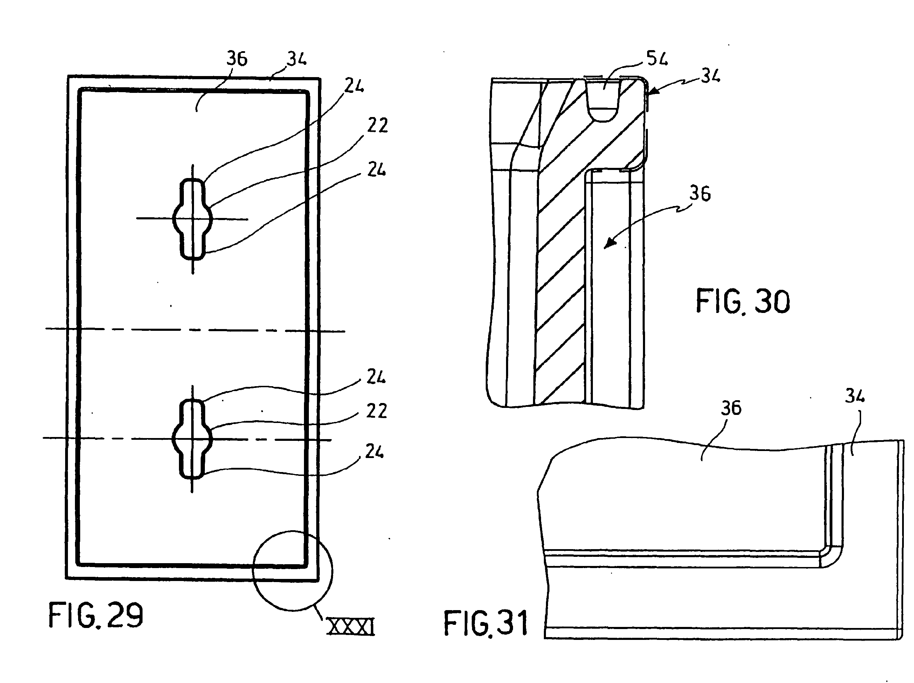

Figure 29 illustrates a sectional view of the frame along the line XXIX-XXIX of figure 27;
Figure 30 illustrates an enlarged view of the detail XXX of figure 28;
Figure 31 illustrates an enlarged view of the detail XXXI of figure 29;
Figure 32 illustrates a perspective view of a possible embodiment of a frame of a modular architectural element according to the present invention;
Figure 33 illustrates a perspective view of a possible embodiment of a frame of a modular architectural element according to the present invention;
Figures 34 and 35 illustrate perspective views along different angles of a closure panel for the modular architectural element according to the present invention, in particular for the architectural element corresponding with the frame of figure 25, 32 or 33;
Figures 36 and 37 illustrate perspective views along different angles of a closure panel for the modular architectural element according to the present invention, in particular for the architectural element corresponding with the frame of figure 25, 32 or 33;

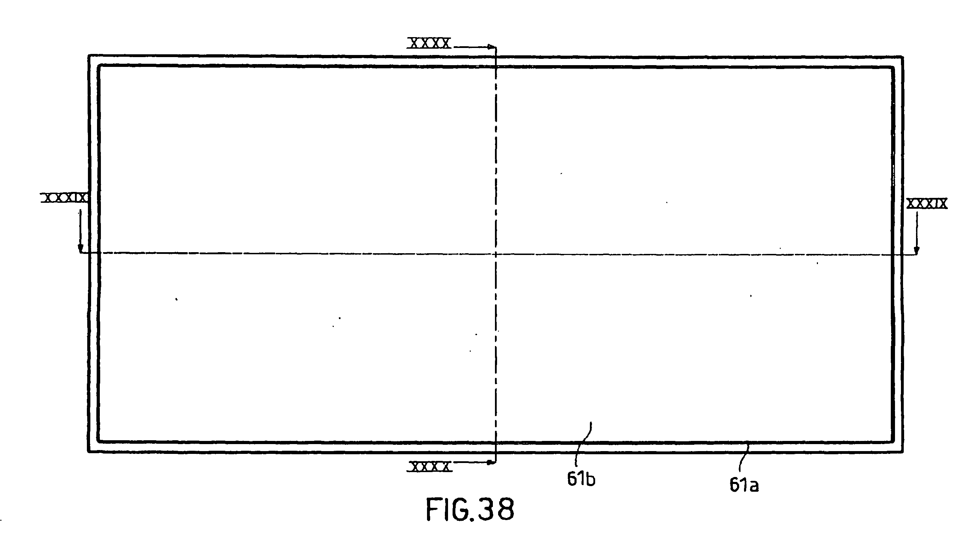

Figure 38 illustrates top view of the closure panel of figure 36;

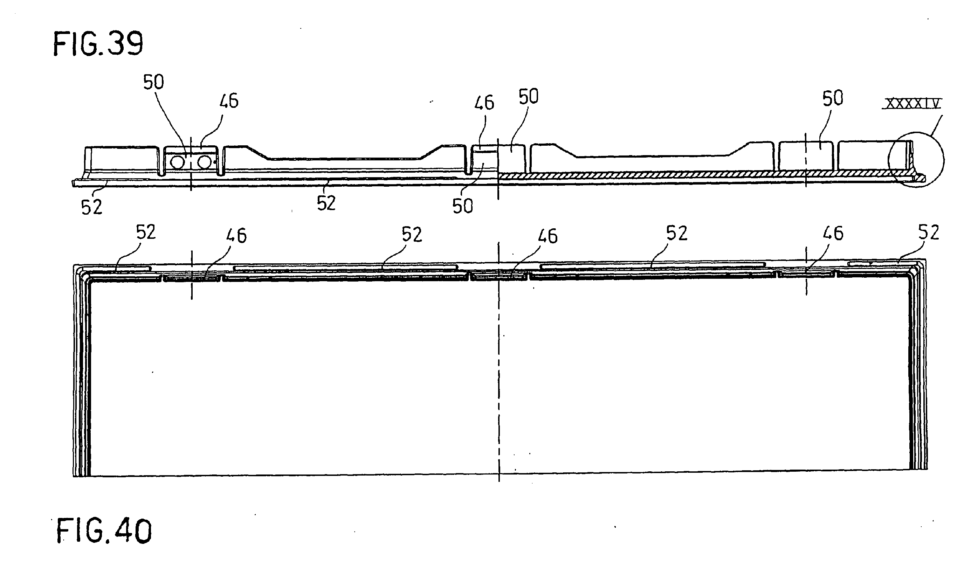

Figure 39 illustrates a sectional view of the closure panel along the line XXXIX-XXXIX of figure 38;
Figure 40 illustrates partial bottom view of the closure panel of figure 36;

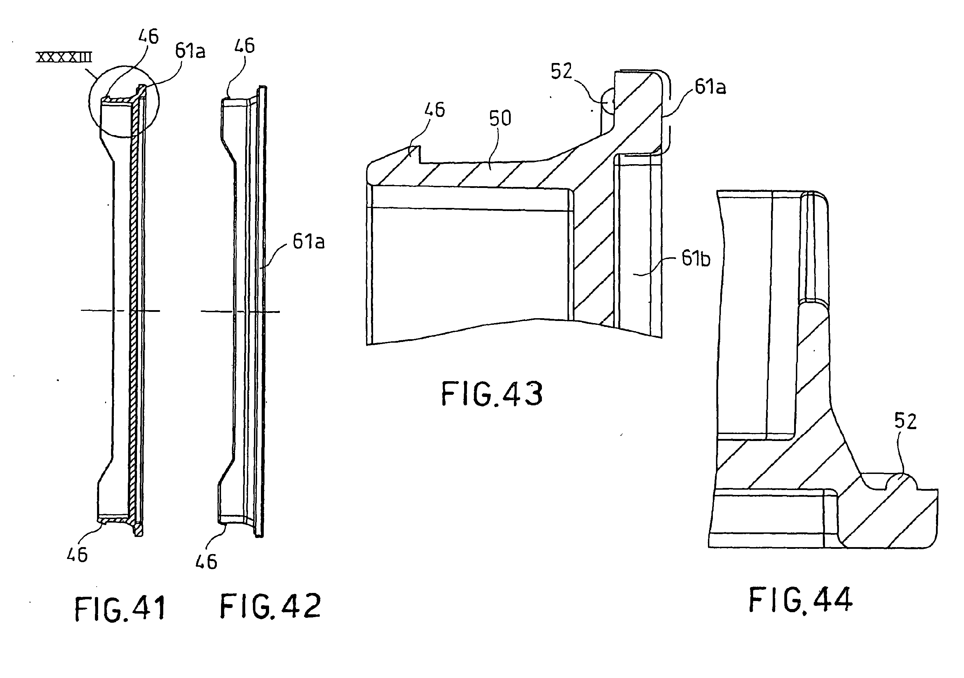

Figure 41 illustrates a sectional view of the closure panel along the line XXXXI-XXXXI of figure 38;
Figure 42 is a side view of the panel of figure 36;
Figure 43 illustrates an enlarged view of the detail XXXXIII of figure 41;
Figure 44 illustrates an enlarged view of the detail XXXXIV of figure 39;

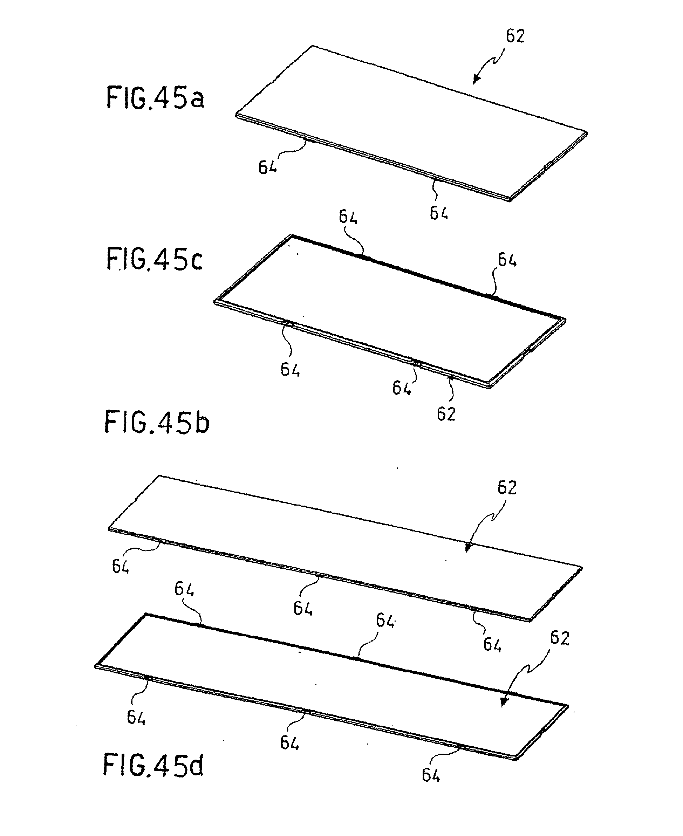

Figures 45a-d illustrate top and bottom views, respectively, of two cover panels for a modular architectural element according to the present invention, in particular for the architectural element corresponding with the frame of figure 25, 32 or 33;

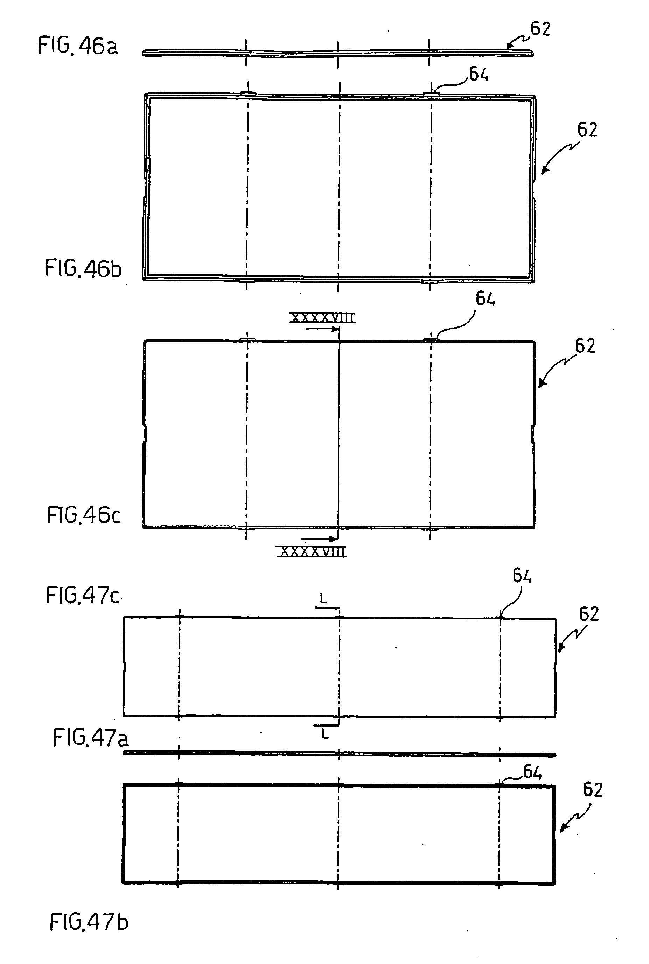

Figures 46a-c illustrate side, bottom and top views, respectively, of the cover panel of figure 45a;
Figures 47a-c illustrate side, bottom and top views, respectively, of the panel of figure 45b;

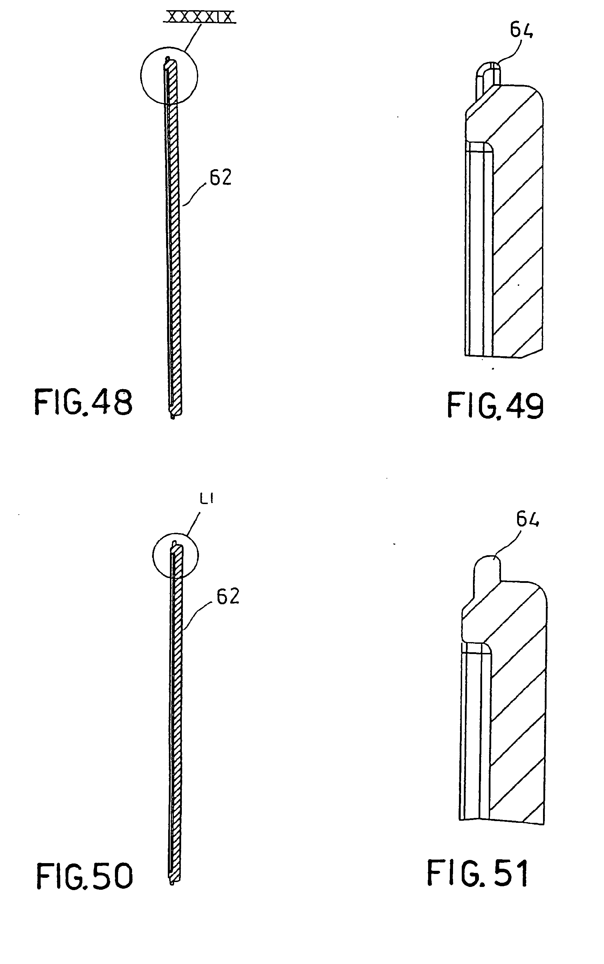

Figure 48 illustrates a sectional view of the cover panel along the line XXXXVIII-XXXXVIII of figure 46c;
Figure 49 illustrates an enlarged view of the detail XXXXIX of figure 48;
Figure 50 illustrates a sectional view of the cover panel along the line L-L of figure 47c;
Figure 51 illustrates an enlarged view of the detail LI of figure 50;
Figures 52a-b illustrate perspective views along different angles of a possible embodiment of a frame for a modular architectural element according to the present invention;
Figure 52c illustrates a front view of the frame of figure 52b, along the arrow A;
Figure 53 illustrates a sectional view of the frame along the line LIII-LIII of figure 52c;
Figure 54 illustrates a sectional view of the frame along the line LIV-LIV of figure 52c;

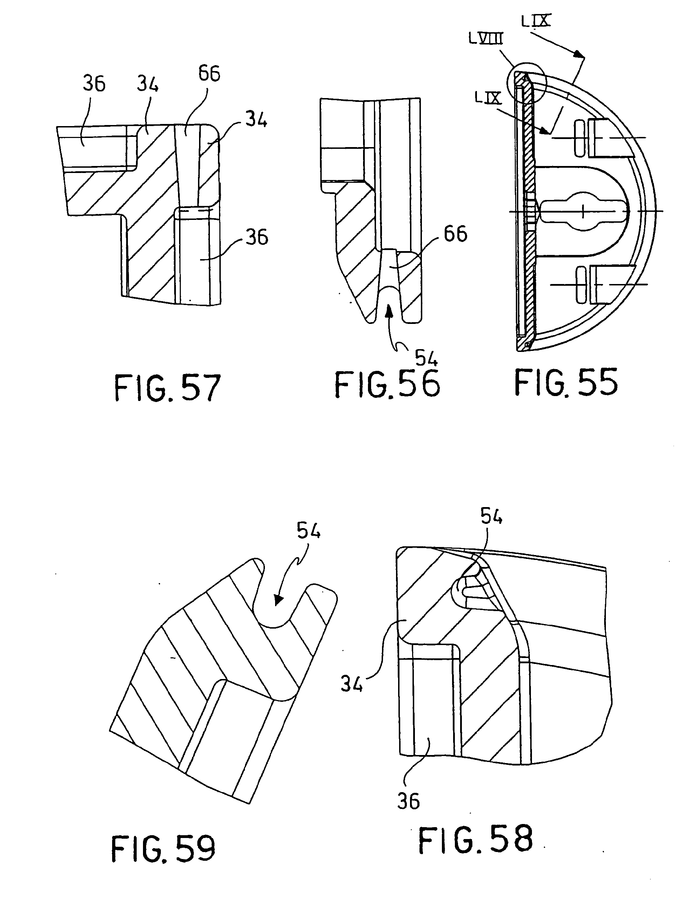

Figure 55 illustrates a sectional view of the frame along the line LV-LV of figure 52c;
Figure 56 illustrates an enlarged view of the detail LVI of figure 53;
Figure 57 illustrates an enlarged view of the detail LVII of figure 54;
Figure 58 illustrates an enlarged view of the detail LVIII of figure 55;
Figure 59 illustrates a sectional view of the frame along the line LIX-LIX of figure 55;
Figures 60a-b illustrate perspective views along different angles of a closure panel for the modular architectural element according to the present invention, in particular for the architectural element corresponding with the frame of figure 52a;
Figure 60c illustrates a front view of the closure panel along the arrow A of figure 60a;
Figure 60d illustrates a rear view of the closure panel along the arrow B of figure 60b;

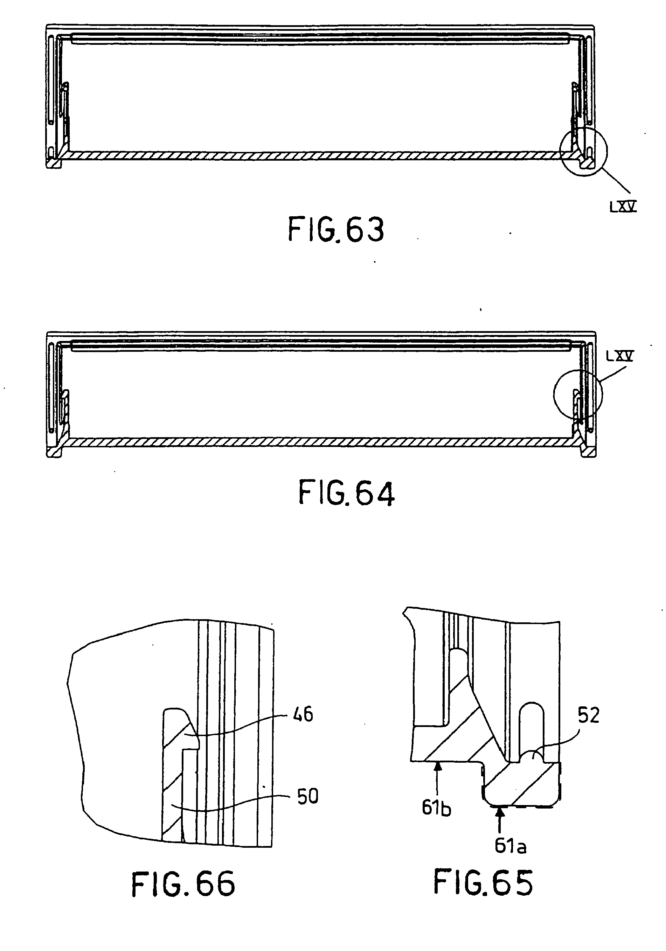

Figure 61 illustrates a sectional view of the closure panel along the line LXI-LXI of figure 60c;
Figure 62 illustrates an enlarged view of the detail LXII of figure 61;
Figure 63 illustrates a sectional view of the closure panel along the line LXIII-LXIII of figure 60c;
Figure 64 illustrates a sectional view of the closure panel along the line LXIV-LXIV of figure 60c;
Figure 65 illustrates an enlarged view of the detail LXV of figure 63;
Figure 66 illustrates an enlarged view of the detail LXVI of figure 64;

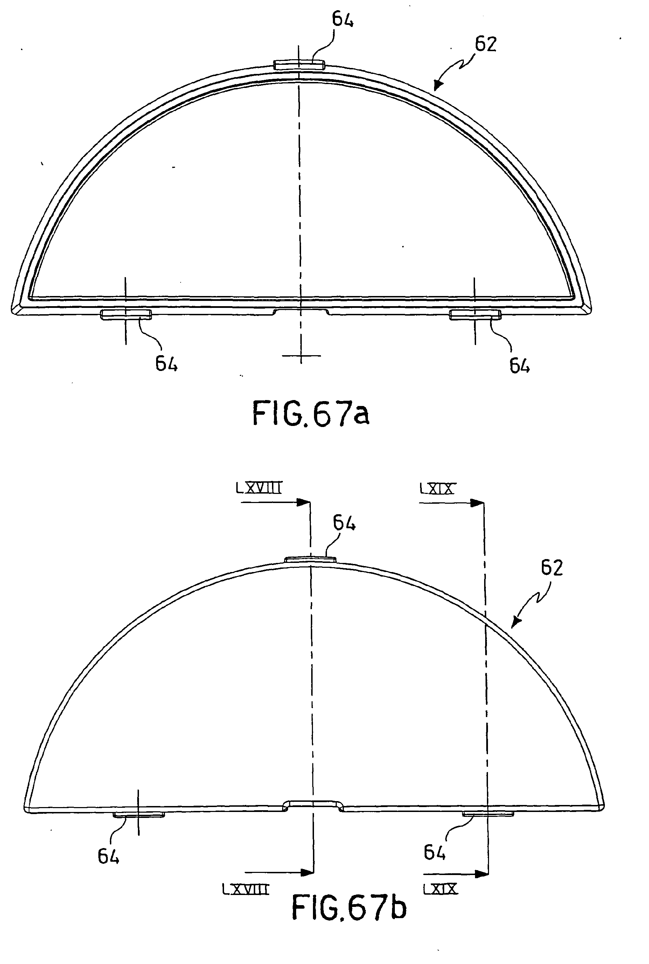

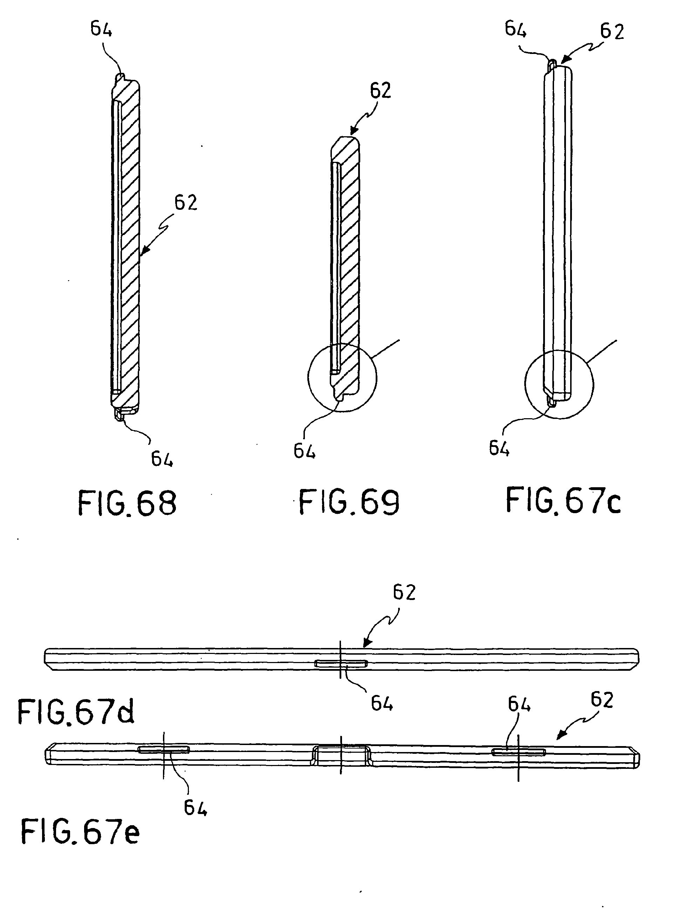

Figures 67a-e illustrate bottom, top, side, front and rear views, respectively, of a cover panel for a modular architectural element according to the present invention, in particular for the architectural element corresponding with the frame of figure 52a;
Figure 68 illustrates a sectional view of the cover panel along the line LXVIII-LXVIII of figure 67b;
Figure 69 illustrates a sectional view of the cover panel along the line LXIX-LXIX of figure 67b;
Figures 70a and 70b illustrate perspective views of related uses of a possible embodiment of an architectural element according to the present invention;
Figures 70c-i illustrate respective perspective views from two different angles: rear along the arrow A of figure 70d, front along the arrow B of figure 70c, top side along the arrow C of figure 70d, of a possible embodiment of a frame for a modular architectural element according to the present invention, for example illustrated in figures 70a and 70b;
Figure 71a illustrates a sectional view of the frame along the line LXXIa-LXXIa of figure 70f;
Figure 71b illustrates a sectional view of the frame along the line LXXIb-LXXIb of figure 70f;
Figure 71c illustrates a sectional view of the frame along the line LXXIc-LXXIc of figure 70f;
Figure 72a illustrates an enlarged view of the detail LXXIIa of figure 71b;
Figure 72b illustrates an enlarged view of the detail LXXIIb of figure 71a;
Figure 72c illustrates an enlarged view of the detail LXXIIc of figure 71c;

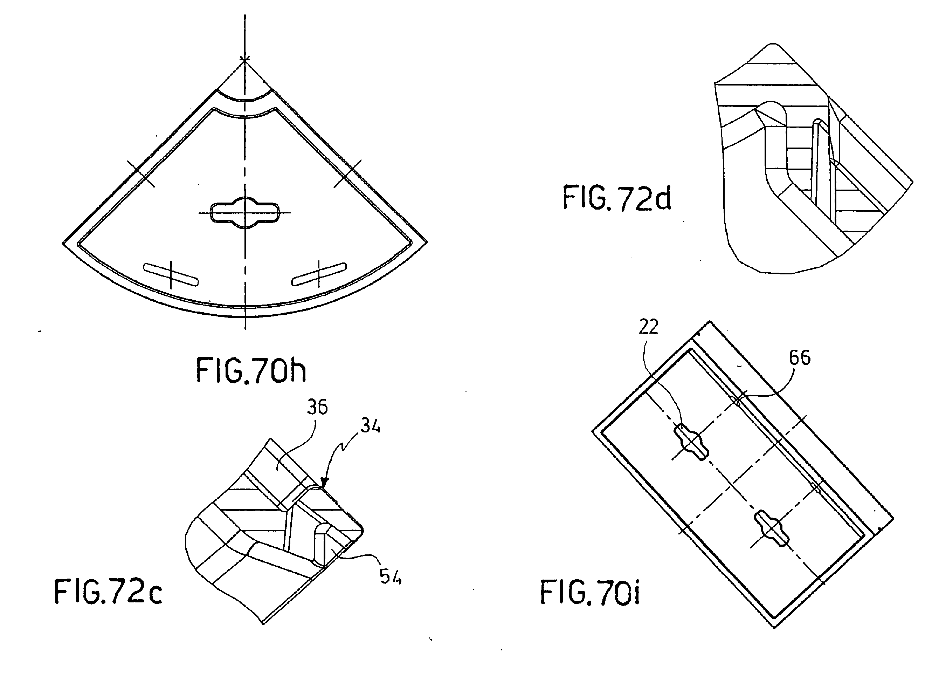

Figure 72d illustrates an enlarged view of the detail LXXIId of figure 71c;

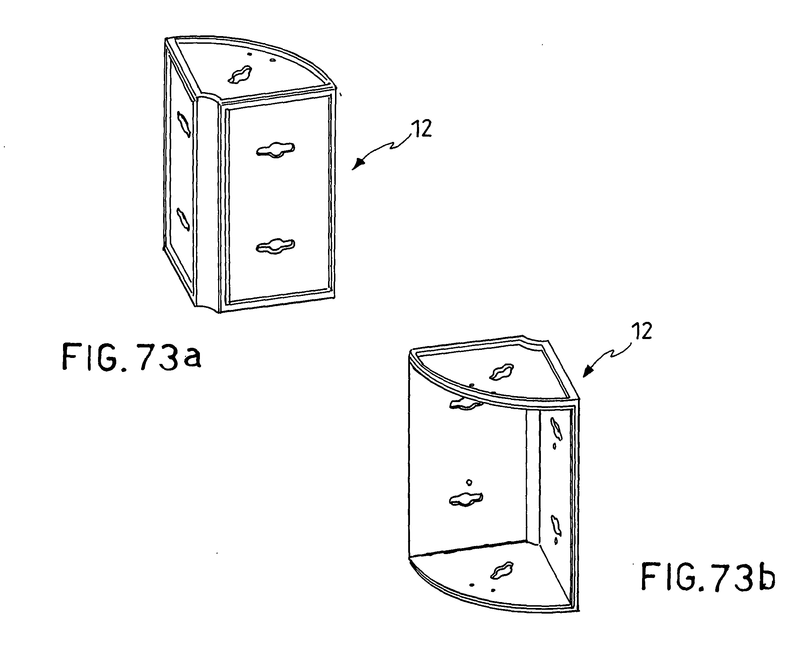

Figures 73a and 73b illustrate perspective views along different angles of a possible embodiment of a frame for a modular architectural element according to the present invention;

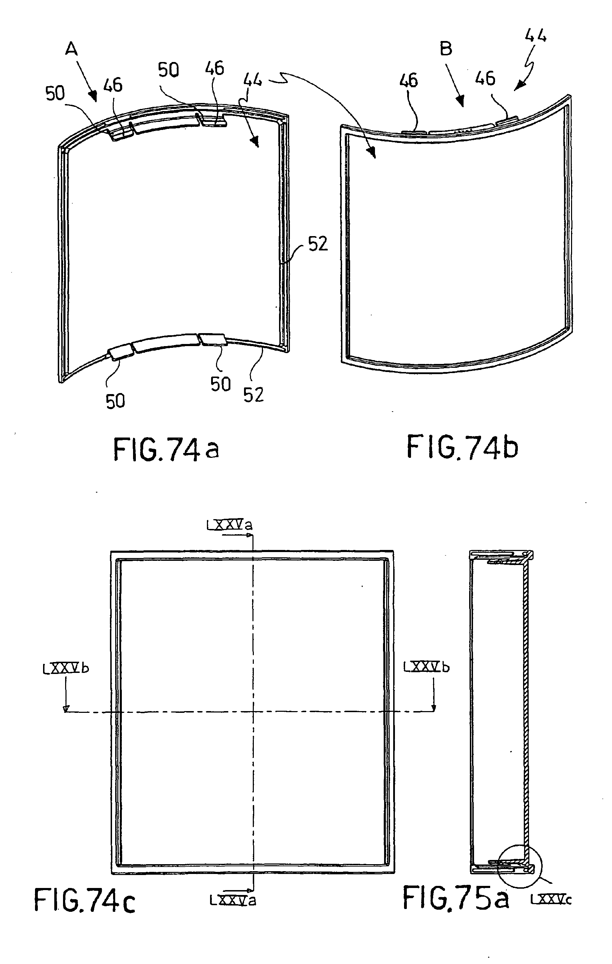

Figures 74a and 74b illustrate perspective views along different angles of a possible embodiment of a closure panel for a modular architectural element according to the present invention, in particular for the architectural element corresponding with the frame of figure 70a;
Figure 74c illustrates a front view of the closure panel along the arrow A of figure 74a;

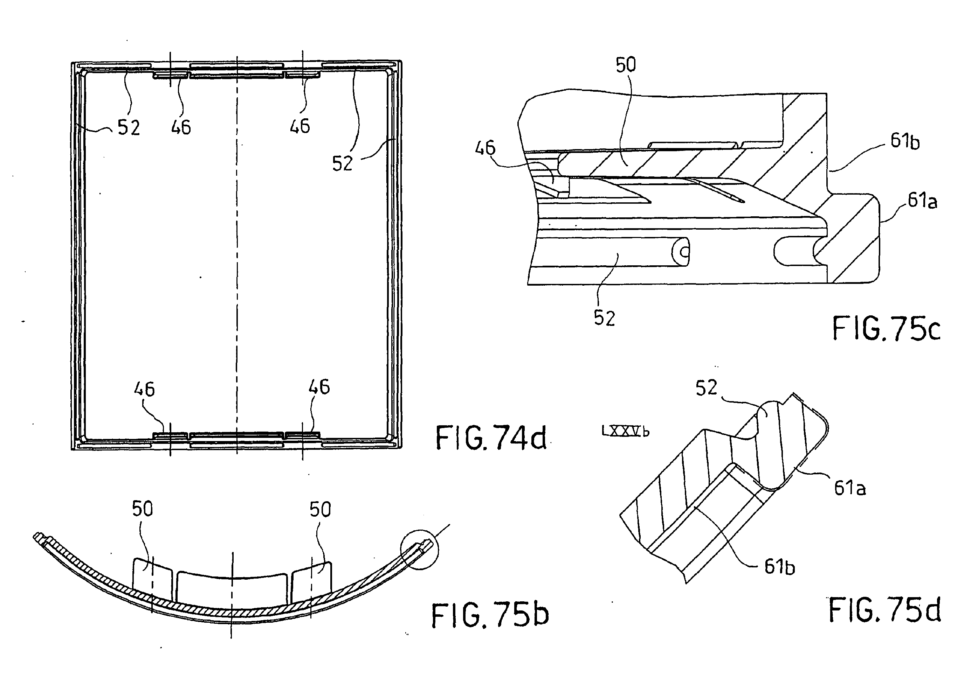

Figure 74d illustrates a rear view of the closure panel along the arrow B of figure 74b;
Figure 75a illustrates a sectional view of the closure panel along the line LXXVa-LXXVa of figure 74c;
Figure 75b illustrates a sectional view of the closure panel along the line LXXVb-LXXVb of figure 74c;
Figure 75c illustrates an enlarged view of the detail LXXVc of figure 75a;
Figure 75d illustrates an enlarged view of the detail LXXVd of figure 75b;

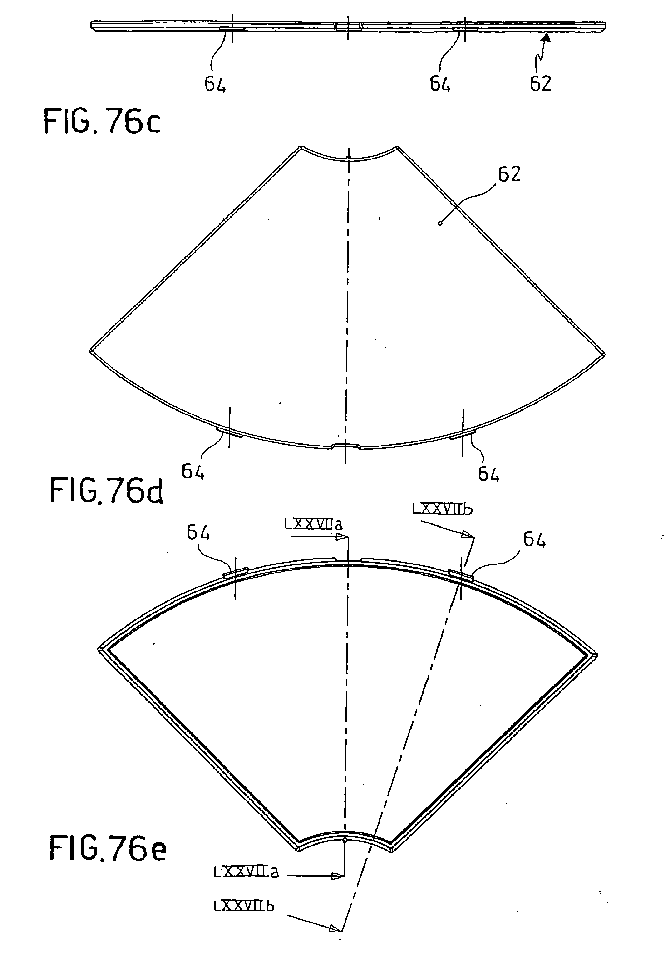

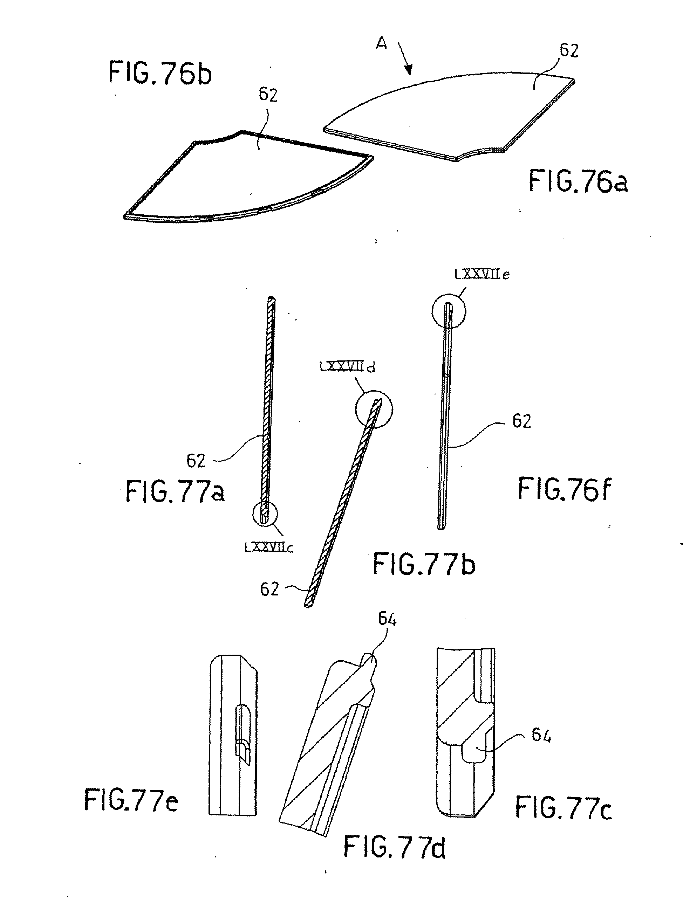

Figures 76a-f illustrate respective perspective views from two different angles, front along the arrow A of figure 76a, top, bottom and side of a cover panel for a modular architectural element according to the present invention, in particular for the architectural element corresponding with the frame of figure 70a;
Figure 77a illustrates a sectional view of the cover panel along the line LXXVIIa-LXXVIIa of figure 76e;
Figure 77b illustrates a sectional view of the cover panel along the line LXXVIIb-LXXVIIb of figure 76e;
Figure 77c illustrates an enlarged view of the detail LXXVIIc of figure 77a;
Figure 77d illustrates an enlarged view of the detail LXXVIId of figure 77b;
Figure 77e illustrates an enlarged view of the detail LXXVIIe of figure 76f;

With referenced to the abovementioned figures, a modular architectural element was indicated in its entirety with 10, adapted for example to make architectural or decorative structures such as walls, coverings, decorative elements or other items. The elements which the different embodiments have in common were indicated with the same numerical reference.

In general terms, the modular architectural element 10 comprises a frame 12 defining at least several side walls of the architectural element.

The architectural element is internally hollow, defining an inner cavity which, according to several embodiments, may house lighting means, to transform the architectural element into a lighting body.

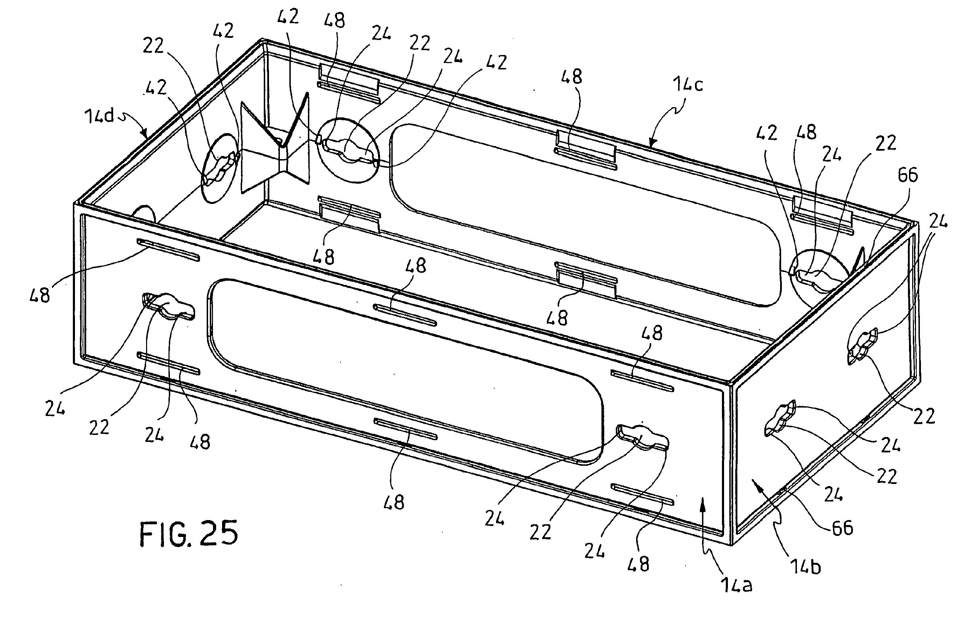

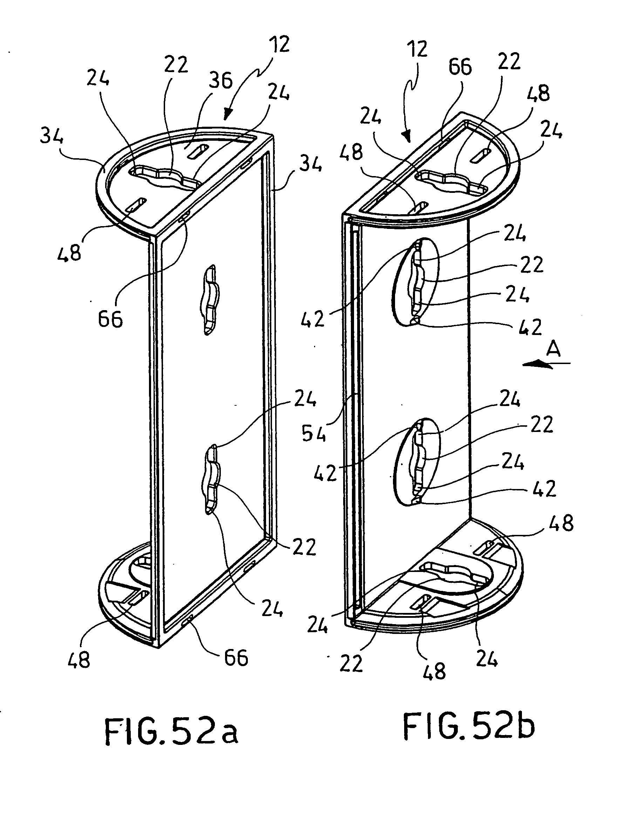

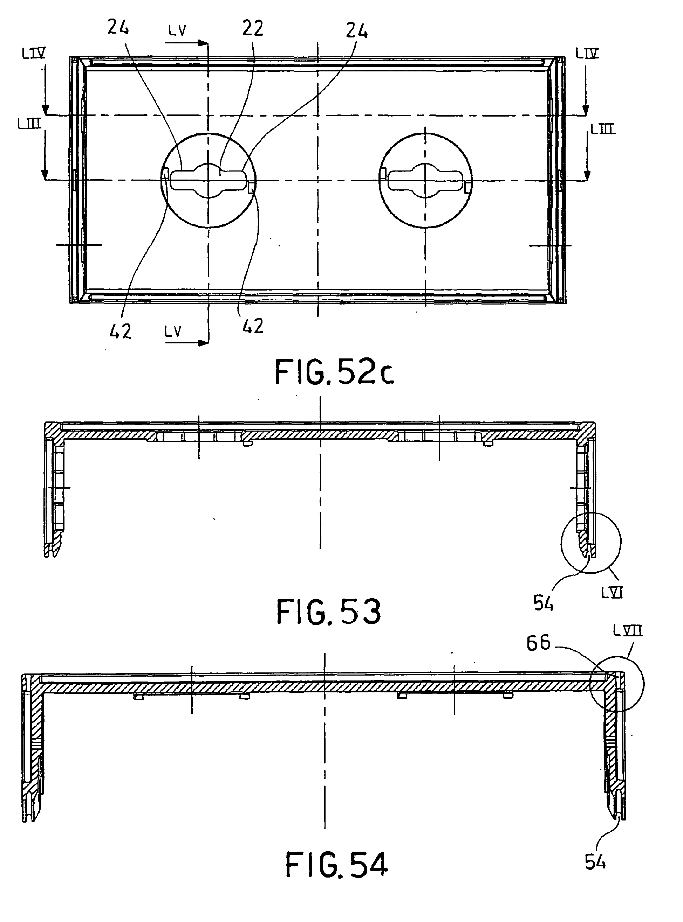

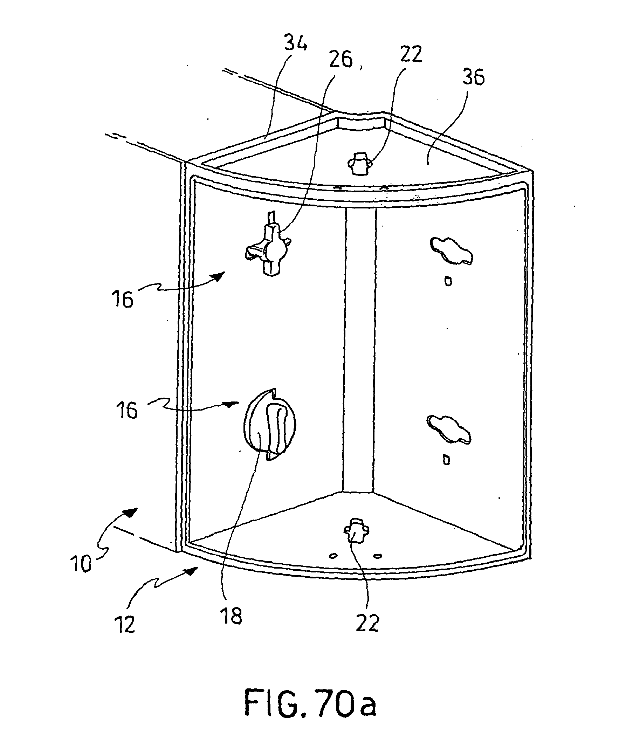

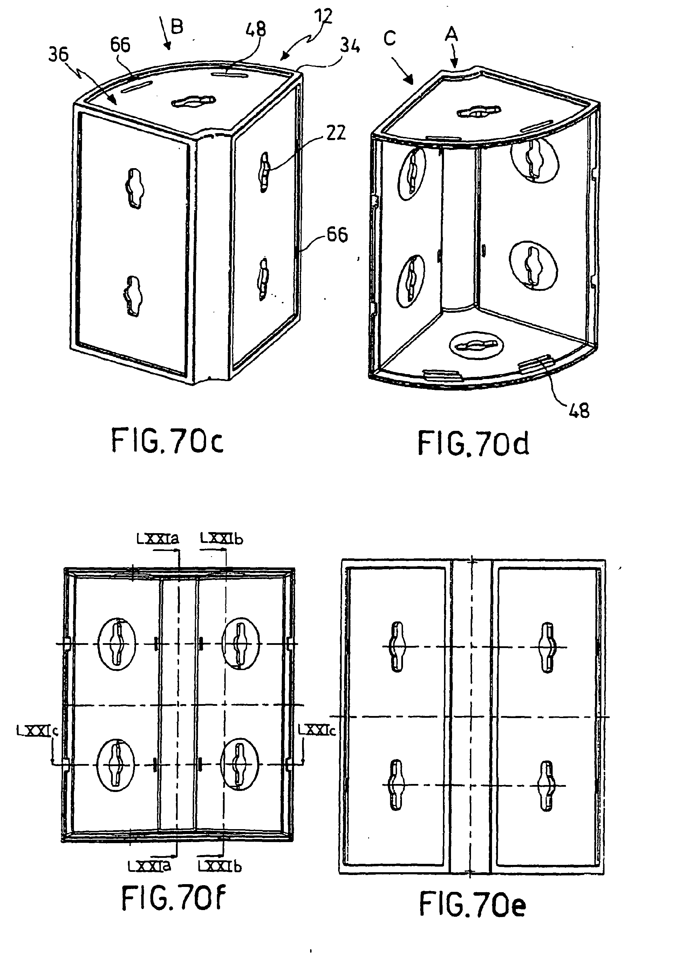

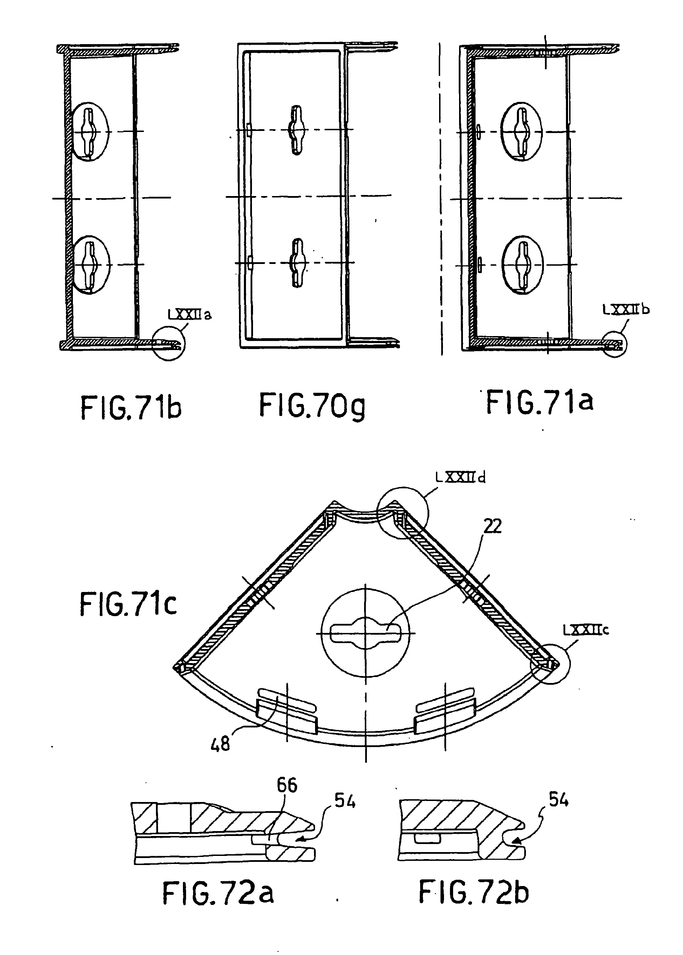

Several examples of frames 12 are illustrated in figure 25 and the following, in figure 52a and the following, and in figure 70a and the following. Of course other, non-illustrated embodiments are also possible.

The frame 12 is internally hollow, at least partially defining the inner cavity of the architectural element. The frame 12 comprises contour walls which permit at least one access to the inner cavity of the frame. Preferably, the access to the inner cavity is ensured by the absence of a front and/or rear wall which, together with the frame 12, delimits the inner cavity.

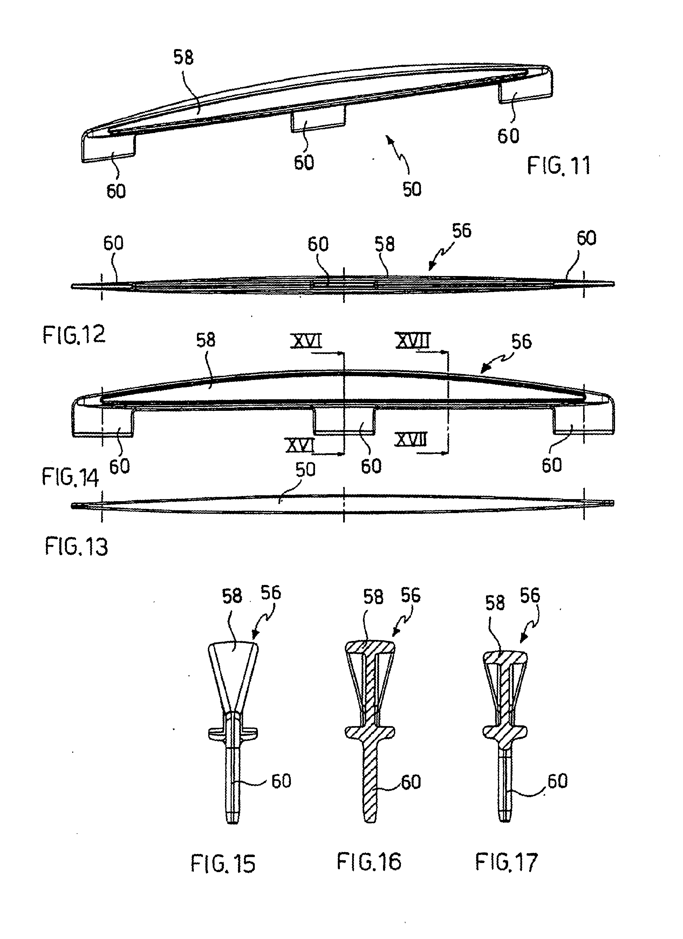

In the example of figure 12, a frame with parallelepiped shape is illustrated, defined by two-by-two parallel and opposite contour walls 14a-d defining a closed perimeter. The access to the inner cavity of the architectural element is ensured by the absence of the front and rear wall. In accordance with a non-illustrated embodiment, the access to the inner cavity may be also be ensured by means of the absence of the single front (or rear) wall.

In the example of figure 52a, a modular architectural element is illustrated which is adapted to make a terminal curvilinear element. In this case, the frame 12 is defined by three contour walls 14a-c defining an open perimeter. The shape of the contour walls 14a and 14c arranged at the end is realised so that the inner cavity of the modular element may be delimited by a single, appropriately shaped front wall. In the case illustrated, the contour walls 14a and 14c arranged at the end have a curvilinear edge (for example semicircular or circular). The absence of the front wall ensures the access to the inner cavity defined by the architectural element.

In the example of figure 70a, a modular architectural element is illustrated which is adapted to make a terminal or connection curvilinear element. In this case, the frame 12 is defined by four contour walls 14a-d. The contour walls 14a and 14b are parallel and opposite while the contour walls 14c and 14d intersect each other. The shape of the opposite contour walls 14a and 14b is realised so that the inner cavity of the modular element may be delimited by an appropriately shaped front wall. In the case illustrated, the opposite contour walls 14a and 14b have a curvilinear edge (for example a quarter-circle or a circular arc). The absence of the front wall ensures the access to the inner cavity defined by the architectural element.

In accordance with the present invention, two architectural elements are adapted to be fit with each other at one contour wall of the respective frame 12 and to be coupled to each other by means of removable coupling means 16 which cross the respective fit contour walls of the two adjacent architectural elements. The positioning of the removable coupling means is permitted through the inner cavity of the architectural element, made accessible in the frame as previously described.

In accordance with a possible embodiment, the removable coupling means 16 comprise a coupling element or key 18 which extends along a longitudinal direction 20 in order to cross two adjoining contour walls, belonging respectively to adjacent architectural elements. With 22, a slot of a contour wall is indicated, adapted to receive the key 18. In several illustrated examples, two slots are foreseen on one contour wall.

Advantageously, the slot and the key have respective transverse sections adapted to define at least two mutual positions of the key and slot corresponding with an insertion position and a coupling position. Preferably, the mutual insertion and coupling positions of the key and slot are obtained by means of rotation of the key itself.

In particular, the slot 22 has a transverse section (or shape) which extends predominantly in a transverse direction (with reference to the longitudinal direction of the key) to form at least one lobe 24. In the figures, a slot is illustrated defining two opposite lobes 24.

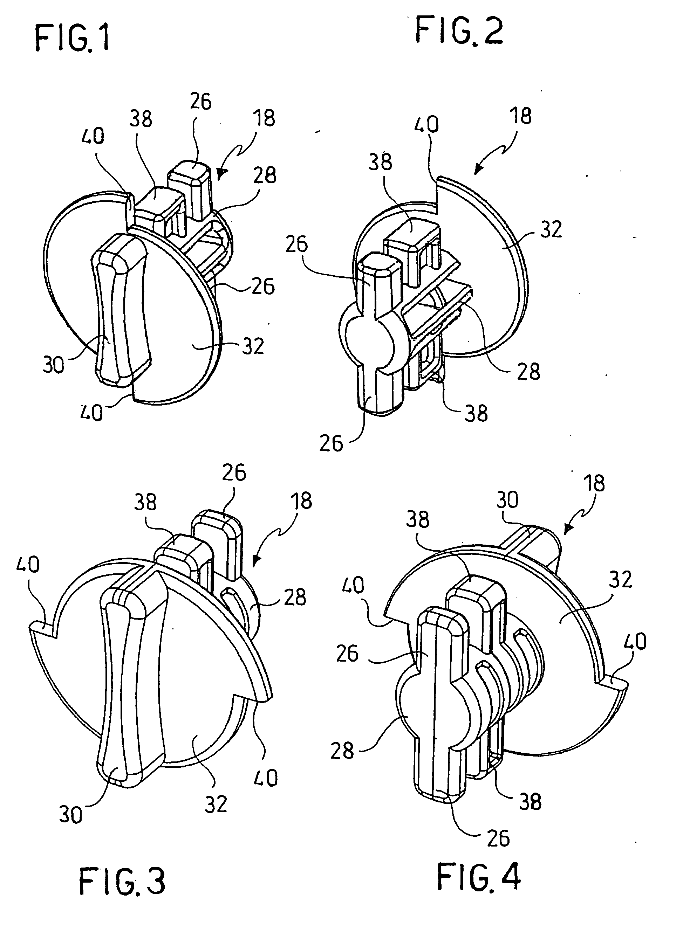

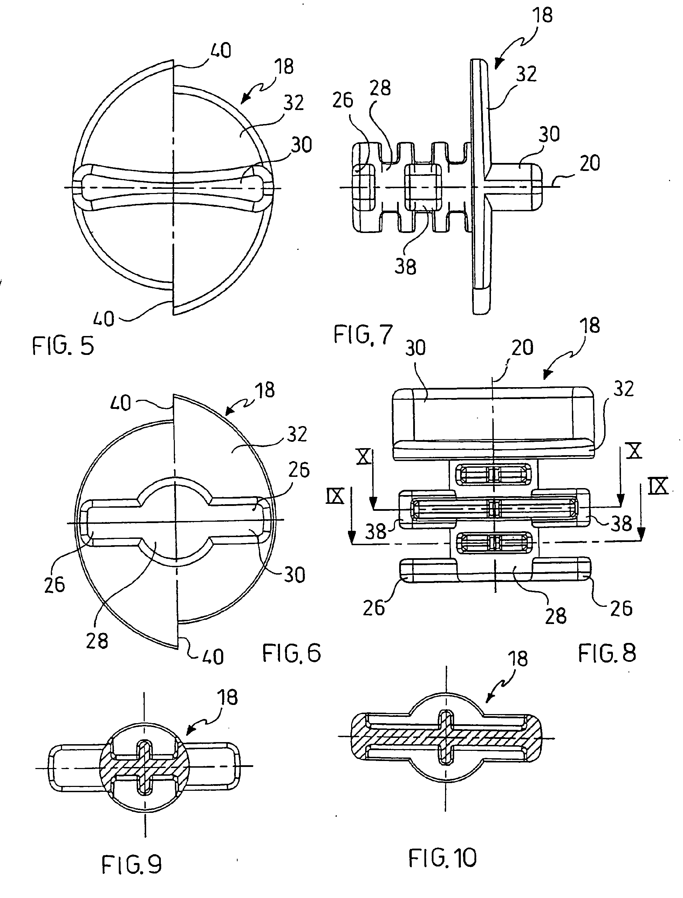

Similarly, the key 18 has a transverse section which predominantly extends in a transverse direction with reference to the longitudinal direction of the key itself, forming at least one transverse lug 26. In the figures, a key is illustrated defining two opposite transverse lugs 26. In accordance with the embodiments illustrated for example in figures 1-10, the key 18 comprises a central pin 28 from which the two diametrically-opposed transverse lugs 26 extend.

With 30, a grip element is indicated which is arranged at one end of the key, for example on the opposite side with respect to the transverse lugs 26, and preferably provided with a flange 32 adapted to abut against the contour wall through which the key is inserted. In other words, the flange 32 has greater transverse dimensions than that of the slot 22.

The length of the key 18, or central pin 28 if foreseen, is such that the transverse lugs 26 are inserted in the slot 22 of the adjacent architectural element and, following for example a key rotation, abut against the inner surface of the respective contour wall.

In accordance with a possible embodiment, the contour walls of the frame 12 comprise an edge 34 which is raised outside the frame itself, delimiting a hollow space 36. Advantageously, the key 18 may comprise at least one additional transverse lug 38, preferably two additional transverse lugs 38, arranged in an intermediate position along the longitudinal direction of the key. In particular, the additional transverse lugs 38 are arranged between the grip element 30 and the transverse lugs 26 and extend along the same transverse direction of the transverse lugs 26. In the case the pin 28 is foreseen, the additional transverse lugs 38 extend from it along the same radial direction of the transverse lugs 26. In particular, the additional transverse lugs 38 are adapted to be arranged between two contour walls of two adjacent architectural elements, at the hollow spaces 36.

In accordance with a possible embodiment, the key comprises a portion of stopping means, adapted to define the relative coupling position between key and slot, and preferably associated with the grip element 30. In the case in which the flange 32 is foreseen, the stopping means may be realised by means of teeth 40 of the flange itself adapted to abut against notches 42 made in the inner surface of the respective contour wall when the key is in coupled position.

Advantageously, the slots of one contour wall are arranged so to permit making a wall wherein the architectural elements are arranged in a grid pattern or else alternated and staggered by half a length between the two rows of contiguous architectural elements.

In accordance with a possible embodiment, the access to the inner cavity of the architectural element is closed by means of at least one closure panel 44 adapted to be removably mounted on the frame 12. In accordance with the preceding description of several frame embodiments, the closure panel 44 defines a front and/or rear wall of the architectural element.

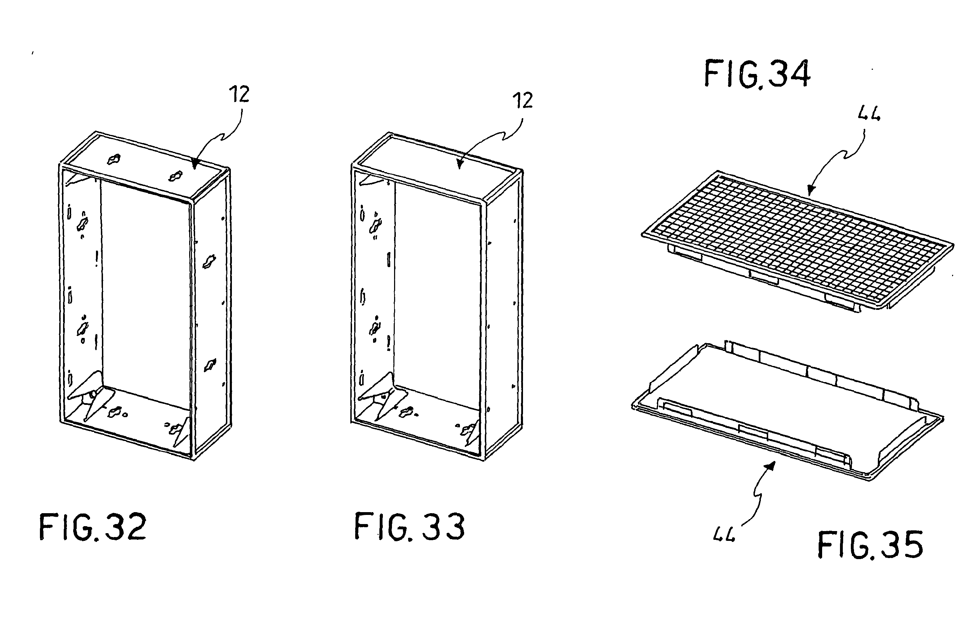

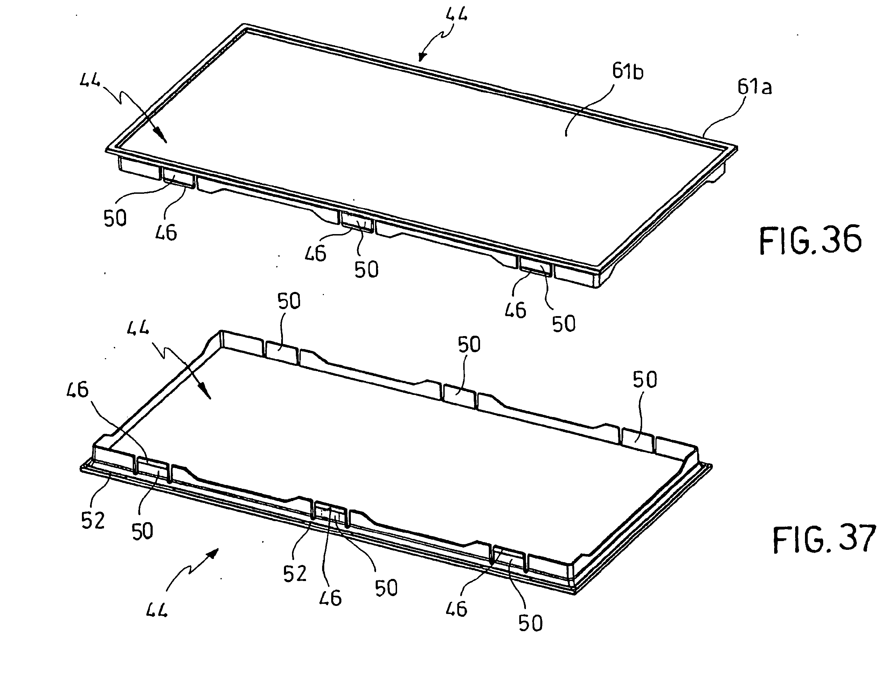

For example, the architectural element comprising the frame of figure 25 foresees the use of two closure panels defining a front wall and a rear wall, respectively (figures 34 and 35 or figures 36 and 37). In accordance with a non-illustrated embodiment, the contour walls of the frame may also comprise the rear wall, and only one closure panel may be foreseen adapted to define for example a front wall of the architectural element.

According to the additional example of figure 52a, the closure panel 44 is realised by means of a curvilinear wall which is adapted to the shape of the contour walls 14a and 14c arranged at the end of the frame. Preferably, such closure panel defines the front wall of the architectural element.

According with the last example of figure 70a, the closure panel 44 is realised by means of a curvilinear wall which is adapted to the shape of the opposite contour walls 14a and 14b. Preferably, such closure panel defines the front wall of the architectural element.

In accordance with a possible embodiment, the closure panel 44 is mounted on the frame 12 by means of a snap coupling, preferably realised by means of teeth 46 and hollow spaces 48. The teeth 46 are preferably made in correspondence with an elastic or deformable structure 50 which permits the snap coupling between the closure panel and the frame. In the embodiment illustrated in the figures, the teeth 46 are associated with the closure panel while the hollow spaces 48 are made in the frame, although the opposite is also possible. Preferably, the hollow spaces 48 extend for the entire length of the respective contour wall, leading to the opposite side in order to permit access to the tooth 46 and to simplify the dismantling.

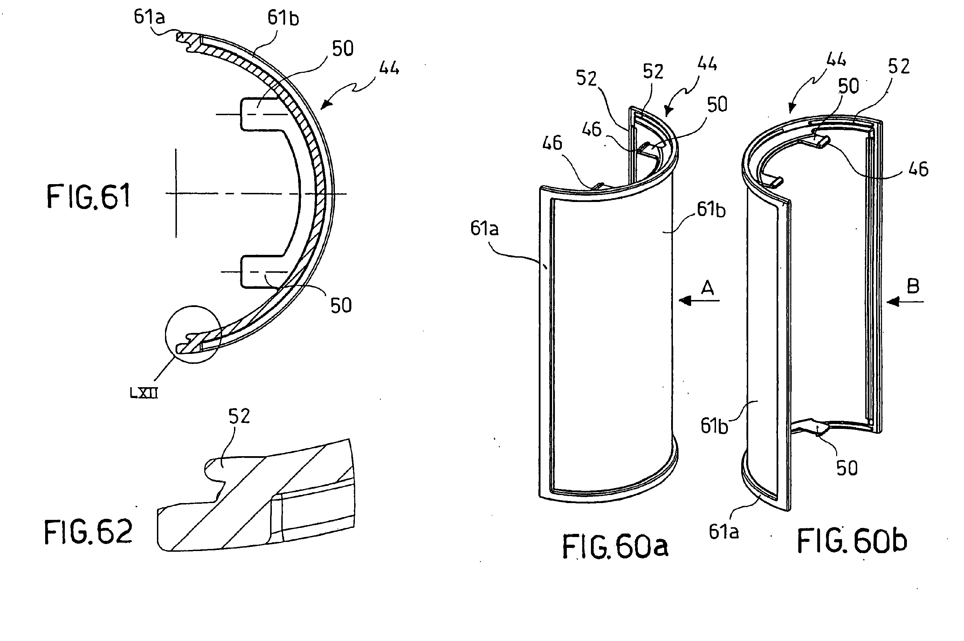

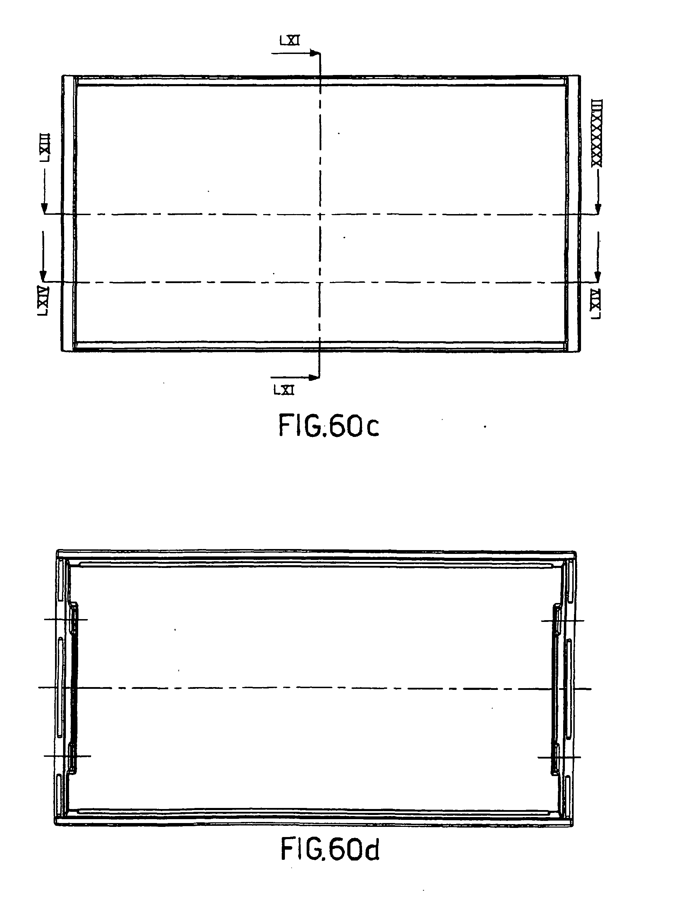

In accordance with a possible embodiment, the coupling between the closure panel and the frame is further improved due to the presence of a form coupling which extends along the edges of the closure panel and frame, adapted to be mutually fit. According to the embodiment illustrated in the figures, the form coupling is realised by means of at least one rib 52, for example realised along the edge of the closure panel, adapted to be inserted in a corresponding seat 54, for example made along the edge of the frame adapted to receive the closure panel. In accordance with a non-illustrated embodiment, the rib is realised on the frame, while the seat is made in the closure panel. In several embodiments, for example with reference to figure 60b, the rib and the seat may be interrupted, or they may extend with continuity along the respect edges of the closure panel and frame.

In accordance with a possible embodiment wherein it is foreseen that the hollow spaces 48 extend for the entire thickness of the respective contour wall, leading to the opposite side, a release accessory is indicated with 56 comprising an elongated body 58, from which at least one tab 60 extends which is adapted to be inserted in the respective hollow space 48. Preferably, as many tabs are foreseen as there are hollow spaces, so to simultaneously release all of the teeth 46. The figures illustrate two possible embodiments of the release accessory, in relation with the number and arrangement of the hollow spaces.

In accordance with a possible embodiment, the closure panel comprises a raised outer edge 61a which define a hollow space 61b, for example adapted to receive a mosaic decoration. Preferably, the mosaic decoration has the same thickness of the raised outer edge 61a, so that the surface of the architectural element is flat.

In accordance with a possible embodiment, the architectural element moreover comprises at least one cover panel 62, adapted to be mounted on the outer surface of contour walls of frames which, in the overall structure generated by the coupling of a plurality of architectural elements, are arranged with free ends and are therefore visible. The cover panel insulates the inner cavity, closing the slots 22 and possibly restoring the continuity of the outer surface of the architectural element.

The cover panel 62 preferably has a shape analogous to that of the respective contour wall, or for example adapted to be inserted in the hollow space 36 when the edge 34 is foreseen. Advantageously, snap coupling means are foreseen, for example realised by means of additional teeth 64 and additional hollow spaces 66. In the illustrated examples the additional teeth extend from the cover panel while the additional hollow spaces are made in the frame, although the opposite is also possible. Preferably, the additional hollow spaces 66 cross the entire thickness of the related wall, leading to the opposite side in order to facilitate the dismantling of the cover panel. Also in this case, a release accessory may be advantageously foreseen, as previously described.

With reference to the attached drawings, the first embodiment illustrates an architectural element of parallelepiped shape. The shape may be of multiple types, for example in cubic, wave, arched or wedge shape. In particular, the first embodiment illustrates an architectural element adapted to realise a central part of the final structure.

The second embodiment illustrates a terminal architectural element. The shape of the end may be curvilinear, pointed, square-cut or in another form.

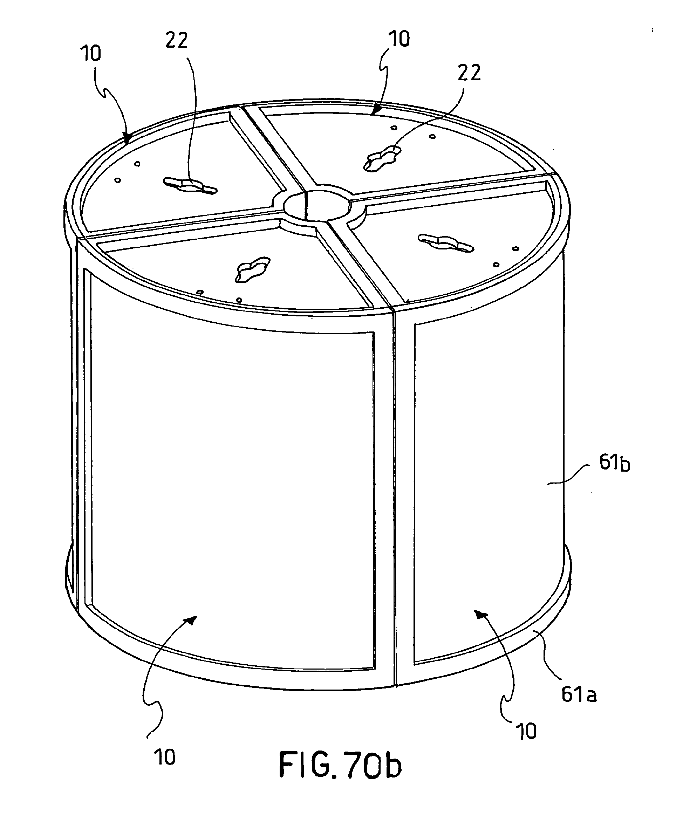

The third embodiment represents a terminal or connection architectural element. The quarter-circumference arched shape is particularly advantageous for making, for example, columns (figure 70b) or connections between walls which extend in different directions.

Below, the mode of use of the above described architectural elements is described.

Two frames of two architectural elements are set side by side in correspondence with two respective contour walls. When the two contour walls are fit together, the respect slots 22 are mutually facing. The lack of a front or rear wall of the architectural element permits access to the inner cavity and to the slots 22 in order to insert the coupling means, in particular the key 18. Grasping the grip element, the key is inserted in the slots of the two contour walls until it arrives on the opposite side. The angular position of the key with respect to the slot is such to permit its insertion. According to the illustrated embodiment, by means of a key rotation (for example corresponding to about 90°), one obtains the passage from the insertion position to the coupling position, wherein the transverse lugs 26 abut against the inner surface of the contour wall opposite the wall wherein the key was inserted. In case additional lugs 38 are foreseen, the rotation of the key also brings these lugs into coupling position, between the two contour walls, or rather inside the hollow spaces 36. Preferably, the rotation of the key is delimited by stopping means. In the illustrated examples, the teeth 40 abut against the notches 42 defining the coupling position.

When the frame is coupled to adjacent frames by means of insertion and rotation of the respective keys, the access to the inner cavity of the architectural element may be closed by means of the closure panel(s), preferably snap mounted as previously described.

If the frame corresponds to a free end of the structure which one wishes to make, appropriate cover panels may be snap locked at the contour walls which face outward, in order to cover the slots 22 and to restore the outer surface aesthetics and continuity.

For the built structure's dismantling, it is possible to work backwards with respect to that described above. In other words, the closure panels, and possible cover panels, may be dismantled for example by means of suitable release accessories which release the coupling between the teeth 46 and the hollow spaces 48. Subsequently, the keys are brought back into insertion position, for example by carrying out a rotation opposite to that previously described. Unthreading the keys from the respective slots, the frames result free and independent.

From the above, one may appreciate how foreseeing a modular architectural element as previously described permits satisfying the aforesaid need to easily and quickly make architectural structures which are adapted to different environments and with multiple aesthetic effects. Such structures may also be easily and quickly dismantled or modified.

Simultaneously, it is possible to satisfy the additional need of obtaining solid and secure structures, wherein the coupling between the architectural elements is reliable and equally distributed over all contour surfaces. Such aspect is advantageously obtained due to the presence of coupling means which cross the fit contour walls and which may also be positioned in additional points along the contour wall itself.

A further advantage of the architectural element according to the invention lies in the unusual structural simplicity of the same, which permits its production at a very low cost.

The aspects described as further possible embodiments, improving the stability and simplicity of use of the invention, in addition to consequently improving its aesthetic appearance.

In accordance with a possible embodiment, the architectural element according to the present invention comprises a frame 12 provided with contour walls defining several of the side walls of the architectural element. Moreover, the architectural element comprises at least one closure panel 44 and/or at least one cover panel which may be removably associated with the frame, as previously described.

Preferably, the closure panel 44 and/or the cover panel comprise respective hollow spaces 32, 61b which house a decoration, for example a mosaic decoration.

The possibility of substituting a wall of the architectural element or covering a contour wall of the frame permits obtaining innumerable surface decorations on a same frame or on several frames already coupled together, foreseeing coupling means as previously described.

It is clear that variations and/or additions may be foreseen to that described above and illustrated, for example regarding the shapes and size of the frames, panels, coupling means and other components of the architectural element.

With regard to the preferred embodiments of the above described architectural element, and in order to satisfy contingent and specific needs, one skilled in the art may introduce numerous modifications, adaptations and substitutions of elements with other functionally equivalent elements, without however departing from the scope of the following claims.

## Claims

1. Architectural element (10) comprising a frame (12) formed by contour walls (14a-14d) defining at least several side walls of the architectural element, said architectural element (10) defining an inner cavity and said frame (12) permitting at least one access to such inner cavity, wherein two or more architectural elements are adapted to be fit with each other at a contour wall of the frame (12), and to be coupled to each other by means of removable coupling means (16) which cross the respective fit contour walls of two adjacent architectural elements.

2. Architectural element according to claim 1, wherein the positioning of the removable hooking means is permitted through the inner cavity of the architectural element, through the frame access (12).

3. Architectural element according to claim 1 or 2, wherein the access to the inner cavity is ensured by the absence of a front and/or rear wall of the architectural element itself, which together with the frame 12 delimits the inner cavity.

4. Architectural element according to one of the preceding claims, wherein the frame has a parallelepiped shape defined by two-by-two parallel and opposite contour walls (14a-14d) defining a closed perimeter, the access to the inner cavity being ensured by the absence of the front and/or rear wall.

5. Architectural element according to one of the claims 1-3, wherein said modular architectural element is adapted to realise a terminal curvilinear element and wherein the frame (12) is defined by three contour walls (14a-c) defining an open perimeter, the shape of the contour walls (14a and 14c) arranged at the end being realised so that the inner cavity of the modular element may be delimited by a single, appropriately shaped front wall, the absence of such front wall ensuring the access to the inner cavity defined by the architectural element.

6. Architectural element according to one of the claims 1-3, wherein said modular architectural element is adapted to realise a terminal or connection curvilinear element and wherein the frame (12) is defined by four contour walls (14a-d) of which two contour walls (14a and 14b) are parallel and opposite while the remaining two contour walls (14c and 14d) intersect each other, the shape of the opposite contour walls (14a and 14b) being realised so that the inner cavity of the modular element may be delimited by a single, appropriately shaped front wall, the absence of the front wall ensuring the access to the inner cavity defined by the architectural element.

7. Architectural element according to one of the preceding claims, wherein the removable coupling means (16) comprise a coupling element or key (18) which extends in a longitudinal direction (20) so to cross two fit contour walls, belonging respectively to adjacent architectural elements, at a respective slot (22) of the respective contour wall adapted to receive the key (18).

8. Architectural element according to claim 7, wherein the slot (22) and the key (18) have respective transverse sections adapted to define at least two mutual positions of the key and slot corresponding with an insertion position and a coupling position.

9. Architectural element according to claim 8, wherein the mutual insertion and coupling positions of the key (18) and slot (22) are obtained by means of rotation of the key itself.

10. Architectural element according to one of the claims from 7 to 9, wherein the slot (22) has a transverse section or shape which predominantly extends in a transverse direction with reference to the longitudinal direction of the key, to form at least one lobe (24).

11. Architectural element according to claim 10, wherein the slot (22) defines at least two opposite lobes (24).

12. Architectural element according to claim 10 or 11, wherein the key (18) has a transverse section which predominantly extends in a transverse direction with reference to the longitudinal direction of the key itself, forming at least one transverse lug (26).

13. Architectural element according to claim 12, wherein the key (18) defines at least two opposite transverse lugs (26).

14. Architectural element according to claim 12 or 13, wherein the key (18) comprises a central pin (28) from which at least one transverse lug (26) radially extends.

15. Architectural element according to claim 14, wherein the key (18) comprises a central pin (28) from which two diametrically-opposed transverse lugs (26) extend.

16. Architectural element according to one of the claims from 12 to 15, wherein the length of the key (18), or central pin (28) if foreseen, is such that the transverse lugs (26) are inserted in the slot (22) of the adjacent architectural element, and preferably following a key rotation, abut against the inner surface of the respective contour wall.

17. Architectural element according to one of the preceding claims, wherein the contour walls of the frame (12) comprise an edge (34) which is raised outside the frame itself, delimiting a hollow space (36).

18. Architectural element according to claim 17, when dependent on one of the claims from 12 to 16, wherein the key (18) comprises at least one additional transverse lug (38), preferably two additional transverse lugs (38), adapted to be arranged between two fit contour walls of two adjacent architectural elements, at the hollow spaces 36.

19. Architectural element according to claim 18, wherein said at least one additional transverse lug (38) is arranged at an intermediate section of the key (18) along the longitudinal direction (20).

20. Architectural element according to claim 18 or 19, wherein said at least one additional transverse lug (38) is arranged between a grip element (30) and the at least one transverse lug (26) and extends along the same transverse direction.

21. Architectural element according to one of the claims from 18 to 20, wherein said at least one additional transverse lug (38) extends from a central pin (28) of the key (18) in the same radial direction of the at least one transverse lug (26).

22. Architectural element according to one of the claims from 7 to 21, wherein the key (18) comprises a grip element (30) arranged at one end of the key (18).

23. Architectural element according to claim 22, when dependent on one of the claims from 12 to 16, arranged on the opposite side with respect to the at least one transverse lug (26).

24. Architectural element according to claim 22 or 23, wherein said grip element (30) is provided with a flange (32) adapted to abut against the contour wall through which the key is inserted.

25. Architectural element according to one of the claims from 22 to 24, wherein said key (18) comprises stopping means, adapted to define the coupling position of the key itself, associated with the grip element (30).

26. Architectural element according to claim 24, wherein said key (18) comprises stopping means adapted to define the coupling position of the key itself, said stopping means being realised by means of teeth (40) of the flange (32) adapted to abut against notches (42) made in the inner surface of the respective contour wall when the key is in coupled position.

27. Architectural element according to one of the preceding claims, wherein the access to the inner cavity of the architectural element is adapted to be closed by means of at least one closure panel (44) adapted to be removably mounted on the frame (12).

28. Architectural element according to claim 27, wherein the closure panel (44) defines a front and/or rear wall of the architectural element.

29. Architectural element according to claim 27 or 28, wherein the closure panel (44) is realised by means of a curvilinear wall which is adapted to the shape of the contour walls (14a and 14c) arranged at the end of the frame (12).

30. Architectural element according to claim 27 or 28, wherein the closure panel (44) is realised by means of a curvilinear wall which is adapted to the shape of the parallel and opposite contour walls (14a and 14b) of the frame (12).

31. Architectural element according to one of the claims from 27 to 30, wherein the closure panel (44) is mounted on the frame (12) by means of a snap coupling.

32. Architectural element according to claim 31, wherein said snap coupling is realised by means of respective teeth (46) and hollow spaces (48).

33. Architectural element according to claim 32, wherein the teeth (46) are made in correspondence with an elastic or deformable structure (50) which permits the snap coupling between the closure panel and the frame.

34. Architectural element according to claim 32 or 33, wherein the teeth (46) are associated with the closure panel (44) while the hollow spaces (48) are made in the frame (12).

35. Architectural element according to one of the claims 32-34, wherein the hollow spaces (48) extend for the entire thickness of the respective contour wall, leading to the opposite side in order to permit access to the tooth (46) and to simplify the dismantling.

36. Architectural element according to one of the claims from 27 to 35, wherein the coupling between the closure panel (44) and frame (12) is further improved due to the presence of a form coupling which extends along the edges of the closure panel and frame, which are adapted to be mutually fit.

37. Architectural element according to claim 36, wherein the form coupling is realised by means of at least one rib (52), for example realised along the edge of the closure panel (44), adapted to be inserted in a corresponding seat (54) made for example along the edge of the frame (12) which is adapted to receive the closure panel.

38. Architectural element according to claim 35, comprising a release accessory (56) comprising an elongated body (58) from which at least one tab (60) extends, adapted to be inserted in the respective hollow space (48).

39. Architectural element according to one of the claims from 27 to 38, wherein the closure panel (44) comprises a raised outside border (61a) which defines a hollow space (61b).

40. Architectural element according to claim 39, wherein said hollow space (61b) is adapted to receive a mosaic decoration having the same thickness as the raised outside edge (61a) so that the surface of the architectural element is flat.

41. Architectural element according to one of the preceding claims, further comprising at least one cover panel (62), adapted to be mounted on the outer surface of contour walls of frames which, in the overall structure generated by the coupling of a plurality of architectural elements, are arranged with free ends and are therefore visible.

42. Architectural element according to claim 41, wherein the cover panel (62) has a shape adapted to be inserted in a hollow space (36) of the contour wall, said hollow space being defined by a raised edge (34).

43. Architectural element according to claim 41 or 42, wherein snap release means are foreseen, for example realised by means of additional teeth (64) and additional hollow spaces (66), in order to mount the cover panel (62) on the frame (12).

44. Architectural element according to claim 43, wherein the additional teeth (64) extend from the cover panel (62), while the additional hollow spaces (66) are made in the frame (12).

45. Architectural element according to claim 43 or 44, wherein the additional hollow spaces (66) cross the entire thickness of the related wall, leading to the opposite side in order to facilitate the dismantling of the cover panel.

46. Architectural element according to claim 45, comprising a release accessory (56) comprising an elongated body (58) from which at least one tab (60) extends, adapted to be inserted in the respective hollow space (66).

47. Architectural element (10) comprising a frame (12) formed by contour walls (14a-14d) defining at least several side walls of the architectural element, wherein at least one closure panel (44) and/or at least one cover panel (62) is adapted to be removably mounted on the frame (12).

48. Architectural element (10) according to claim 47, wherein said closure panel (44) is adapted to define a side wall of said architectural element.

49. Architectural element (10) according to claim 47 or 48, wherein said cover panel (62) is adapted to cover a contour wall of said frame.

50. Architectural element (10) according to one of the claims from 47 to 49, wherein said closure panel (44) and/or said cover panel (62) may be snap mounted on said frame.

51. Architectural element (10) according to one of the claims from 47 to 50, wherein said closure panel (44) and/or said cover panel (62) comprise a hollow space (32, 61b) to receive a decoration, for example a mosaic decoration.

52. Architectural element (10) according to one of the preceding claims, wherein the contour walls of the frame (12) comprise slots (22) which are arranged so to permit realising a wall wherein the architectural elements are arranged in a grid pattern or else alternated and staggered by half a length between two rows of contiguous architectural elements.
